# EUROPÄISCHE PATENTSCHRIFT

(11) **EP 0 667 013 B1**
(45) Veröffentlichungstag und Bekanntmachung des Hinweises auf die Patenterteilung: **21.08.1996**
(21) Anmeldenummer: 93922893.8
(22) Anmeldetag: 25.10.1993
(51) Int. Cl.: G06F 11/22, G05B 23/02, F01K 13/00, G06F 19/00

(54) **DIAGNOSESYSTEM FÜR EINE ANLAGE**
DIAGNOSTIC SYSTEM FOR A PLANT
PROCEDE DE DIAGNOSTIC POUR UNE USINE

(30) Priorität: 06.11.1992 DE 4237575
(43) Veröffentlichungstag der Anmeldung: 16.08.1995
(73) Patentinhaber: SIEMENS AKTIENGESELLSCHAFT, 80333 München (DE)
(72) Erfinder: GRIFFITHS, Antony, D-91077 Kleinsendelbach (DE); MÜLLER, Helmut, D-90425 Nürnberg (DE)
(86) Internationale Anmeldenummer: DE9301012
(87) Internationale Veröffentlichungsnummer: WO9411822

(56) Entgegenhaltungen:
- EP-A- 0 335 380
- EP-A- 0 364 151
- US-A- 4 841 456

## Beschreibung

Die Erfindung bezieht sich auf ein Diagnosesystem für eine Anlage, insbesondere eine Kraftwerksanlage, z.6. für den Turbosatz einer Dampfturbinenanlage, mit einem einer Anzahl von untereinander wechselwirkenden Anlagenteilen zugeordneten Baustein zur on-Line-Meßwerterfassung sowie zur Kontrolle und Aufbereitung von Meßwerten, der über Schnittstellen mit einem Datenbus zur Übertragung von anlagenrelevanten Meßwerten verbunden ist.

In einer Kraftwerksanlage sollen Überwachungseinrichtungen die aktuellen Betriebszustände des Anlagenprozesses erkennbar machen und Abweichungen vom Sollzustand melden. Dazu ist eine umfangreiche Meßdatenerfassung der Betriebswerte der Anlagenteile erforderlich. In einer Dampfturbinenanlage sind dies unter anderem die Komponenten und Hilfssysteme des Turbosatzes als Funktionsgruppe, d.h. die Dampfturbine, ein mit dieser über eine Welle gekoppelter Generator und ein Kondensator. Der Signal- oder Datenaustausch erfolgt üblicherweise über ein Bussystem innerhalb eines den Anlagenteilen gemeinsamen Leitsystems, mit dem der Anlagenprozeß teil- oder vollautomatisch gesteuert und überwacht wird.

Mit zunehmender Energie- oder Arbeitsausnutzung derartiger Anlagen wachsen auch die Anforderungen an die Anlagenverfügbarkeit, wobei für Wartungs- und Instandhaltungsmaßnahmen besonders kurze Stillstandzeiten angestrebt werden. Die dadurch bedingte steigende Komplexität der Überwachungseinrichtungen führt zu wachsenden Schwierigkeiten bei der Handhabung durch das Bedienpersonal in einer Leitwarte, und zwar hinsichtlich sowohl eines umfassenden Überblicks über den aktuellen Anlagenzustand als auch einer frühzeitigen Fehlererkennung. Zwar wird mit zunehmendem Automatisierungsgrad in einem hierarchisch aufgebauten Leitsystem, wie es aus der EP-OS 0 242 609 bekannt ist, eine pyramidenförmig zunehmende Informationsverdichtung der von der Meßwerterfassung gelieferten Daten erreicht; allerdings bleibt die Beurteilung der Meßwerte dennoch dem Bedienpersonal überlassen. Darüber hinaus nimmt mit steigender Komplexität des Überwachungssystems dessen Störanfälligkeit zu.

Aus der EP-A-0 364 151 ist weiterhin ein Diagnosesystem mit einem distribuierten Aufbau bekannt, bei dem ebenfalls eine Beurteilung von Meßwerten dem Bedienpersonal überlassen bleibt.

Der Erfindung liegt die Aufgabe zugrunde, ein Diagnosesystem für eine Kraftwerksanlage, insbesondere eine Dampfturbinenanlage, anzugeben, mit dem ausgehend von einer umfangreichen Meßwerterfassung eine hohe Betriebssicherheit und hohe Anlagenverfügbarkeit erreicht werden.

Diese Aufgabe wird erfindungsgemäß, mittels der Merkmale der beiliegenden Ansprüche gelöst, nämlich durch einen mit dem Datenbus verbundenen Kopplungsbaustein zum Anfordern und zum Weiterleiten von Meßwerten, einen Verwaltungsbaustein zur Verteilung der Meßwerte, eine Anzahl von Analysemodulen zur inhaltsabhängigen Bearbeitung der Meßwerte, einen Speicherbaustein zum Ablegen von Kenngrößen aus dem oder aus jedem Analysemodul, und eine Anzahl von modulspezifischen Bedienerbausteinen zum Abgreifen der Kenndaten aus dem Speicherbaustein.

Durch eine modulspezifische Analyse der Meßwerte in den funktionsspezifischen Analysemodulen wird aus einer umfangreichen Meßwerterfassung eine Gesamtaussage über den Anlagenzustand abgeleitet. Dabei wird zweckmäßigerweise auf die bewährten Funktionsgruppen einer Dampfturbinenanlage, wie den Turbosatz mit den entsprechenden Komponenten oder Anlagenteilen, aufgebaut. Daraus folgt, daß ein in einem bereits vorhandenen Kraftwerkleitsystem bestehendes Meßwerterfassungs- und Datenübertragungssystem als Systemrahmen im wesentlichen bestehen bleiben kann, wobei dieser lediglich um die Analysemodule und die diesen zugeordneten Bedienerbausteine auf einer Benutzeroberfläche sowie gegebenenfalls um zusätzliche, modulspezifische Meßwerterfassungsbausteine zu erweitern ist.

Zur Anpassung an den Systemrahmen ist in zweckmäßiger Ausgestaltung des Diagnosesystems ein an den Datenbus angepaßter Kopplungsbaustein vorgesehen. Über den Kopplungsbaustein werden dann die Meßwerte angefordert und an den Verwaltungsbaustein weitergeleitet.

In jedem Analysemodul werden nach einem vorgegebenen Algorithmus funktionsspezifische Meßwerte analysiert, indem Soll-Ist-Wert-Vergleiche durchgeführt werden, die Meßwerte auf Grenzwerte überprüft werden und/oder die Meßwerte in mathematische Berechnungen einfließen, wobei neue, abgeleitete Kenndaten oder Kenngrößen - gegebenenfalls mit neuer Dimension - ausgegeben werden. So kann z.B. in einem dem gesamten Turbosatz zugeordneten Analysemodul aus den in diesem Modul bearbeiteten Meßwerten ein Wirkungsgrad ermittelt werden, der als Kenngröße und gleichzeitig als Diagnose im Speicherbaustein abgelegt wird. Falls für die Ableitung einer Diagnoseaussage zusätzlich zu den bereits bereitgestellten Meßwerten weitere Meßwerte erforderlich sind, können diese über den Verwaltungsbaustein angefordert werden. Daher umfaßt der Verwaltungsbaustein zusätzlich zu einem Telegrammverteiler auch einen Quittungssammler zur Steuerung der Kommunikation mit dem Meßwerterfassungsbaustein, z.B. zum Anfordern von einzelnen Meßwerten oder von Meßwertpakten.

Jedes Analysemodul ist vorteilhafterweise abgeschlossen. Die Abgeschlossenheit eines Analysemoduls bedeutet, daß es die aufgrund der ihm zur Verfügung stehenden Meßwerte möglichen Analysen und Diagnosen soweit wie möglich selbst durchführt und damit in einem gewissen Sinne autark ist. Es sind daher keine Beziehungen zu oder Abhängigkeiten von anderen funktionsspezifischen Analysemodulen gegeben. Außerdem ist jedes Analysemodul auch von dem ihm zugeordneten modulspezifischen Bedienerbaustein durch Zwischenschaltung des Speicherbausteins entkoppelt. Über den Bedienerbaustein können somit die erstellten Kenngrößen nicht vom Analysemodul direkt, sondern nur durch einen Zugriff auf den Speicherbaustein abgerufen werden. Jedes Analysemodul ist somit durch den Speicherbaustein, der zweckmäßigerweise aus einer Datenbank zur Archivierung und einem temporären Ringspeicher zur kurzzeitigen Zwischenspeicherung von aktuellen Kenngrößen zusammengesetzt ist, von dem diesem Analysemodul zugeordneten Bedienerbaustein entkoppelt.

Durch diese Entkopplung der Analysemodule von den Bedienerbausteinen können vorteilhafterweise die übrigen Bausteine, d.h. der Kopplungsbaustein, der Verwaltungsbaustein und der Speicherbaustein, in den bereits bestehenden Systemrahmen eines üblicherweise vorhandenen Prozeßleitsystems einer Kraftwerksanlage integriert werden. Dadurch wird in besonders einfacher Weise eine freie Konfigurierbarkeit des Diagnosesystems erreicht, wobei zur Vertiefung einer Diagnose lediglich zusätzliche Analysemodule und zugehörige Bedienerbausteine in den Systemrahmen einzusetzen sind.

Um den modularen Aufbau des Diagnosesystems konsequent durchführen zu können, ist eine modulübergreifende Instanz für solche Diagnosen vorgesehen, die einzelne Analysemodule beispielsweise deswegen nicht durchführen können, weil dazu Ergebnisse aus anderen Analysemodulen erforderlich sind. Daher ist in zweckmäßiger Weiterbildung des Diagnosesystems eine modulübergreifende Komponente, eine sogenannte Inferenzkomponente, zur Auswertung einer Wissensbasis vorgesehen, wobei bei Ausgabe einer qualifizierten Größe aus dem oder jedem Analysemodul nach in der Wissensbasis abgelegten Regeln ein Diagnoseergebnis ableitbar ist. Da die Regeln nach der Art eines Expertensystems in der Wissensbasis in der allgemeinen Form "Wenn Bedingung, dann Folgerung" enthalten sind, erfolgt innerhalb des oder jedes Analysemoduls eine Qualifizierung der Kenngrößen in qualitative Größen oder verbale Begriffe. So wird z.B. eine Kenngröße, die eine Überschreitung eines Soll-Wertes um einen bestimmten absoluten Betrag angibt, in die qualifizierte Größe "Der Wert ist zu hoch" umgewandelt. Ob ein Analysemodul algorithmisch und/oder wissensbasiert implementiert ist, hängt im wesentlichen von der Problembeschaffenheit ab, d.h. ob ein Problem und eine Lösung präzise beschreibbar sind oder auf Erfahrungen beruhen.

Um eine Trennung zwischen Aktionsfunktionalität und Bedienerfunktionalität sicherzustellen, sind vorteilhafterweise die Analysemodule und die Bedienerbausteine über den Speicherbaustein voneinander entkoppelt.

Die mit der Erfindung erzielten Vorteile bestehen insbesondere darin, daß aufgrund der mit dem modularen Aufbau des Diagnosesystems verbundenen freien Konfigurierbarkeit das Diagnosesystem in einfacher Weise erweitert und damit eine Diagnose vertieft werden kann. Außerdem wird eine in hohem Maße wünschenswerte Entlastung des Bedienpersonals erreicht, indem eine sich anbahnende Störung frühzeitig erkennbar wird und die Ursache einer bereits eingetretenen Störung schnell auffindbar ist.

Ein Ausführungsbeispiel der Erfindung wird anhand einer Zeichnung näher erläutert. Sie zeigt ein Funktionsschema eines Diagnosesystems mit in fünf aufeinander aufbauenden Ebenen angeordneten Bausteinen und Komponenten.

Der zu überwachende Anlagenprozeß 1 ist im Ausführungsbeispiel der Turbosatz einer Dampfturbinenanlage mit einer Dampfturbine 2 und einem Generator 4 sowie mit einem Kondensator 6. Die Dampfturbine 2 umfaßt einen Hochdruckteil 2a, einen Mitteldruckteil 2b und einen Niederdruckteil 2c, die über eine gemeinsame Welle 8 den Generator 4 antreiben. Der Turbosatz ist mit einer Vielzahl von unterschiedlichen Meßstellen 10, 11, 12 zur Abgbildung des Ist-Zustands des Anlagenprozesses und dessen Randbedingungen versehen. Die während des Betriebs der Anlage, d.h. on-line, erfaßten Meßwerte werden in einem Baustein 14 zur Meßwerterfassung kontrolliert, aufbereitet und über geeignete Schnittstellen als bearbeitete Meßwerte MW an einen Datenbus 16 gegeben, der Bestandteil eines üblicherweise bereits vorhandenen Prozeßleitsystems der Anlage ist.

Der Baustein 14, der die Meßwerte synchron erfaßt, deckt die mit dem Anlagenprozeß 1 zwangsläufig verbundenen Echt- oder Realzeitaspekte ab.

Die bearbeiteten Meßwerte MW werden über den Datenbus 16 entweder direkt oder auf Anforderung an einen Kopplungsbaustein 18, der aus einem ersten Element 18a zur Meßwert-System-Übertragung und einem zweiten Element 18b zur System-Meßwert-Übertragung aufgebaut ist, weitergeleitet. Dies ist durch die fett gedruckten Pfeile 19, 21 und die in entgegengesetzte Richtung zeigenden Pfeile 20, 22 angedeutet, wobei diese Pfeile 19 bis 22 jeweils einen Datenpuffer für eine zeitverzögerte Datenweitergabe bzw. Datenanforderung symbolisieren. Der Kopplungsbaustein 18 bildet innerhalb des Diagnosesystems eine Kopplungsebene.

Der Kopplungsbaustein 18 ist über die durch die Pfeile 21 und 22 symbolisierten Datenpuffer mit einem Verwaltungsbaustein 24 verbunden, der aus einem Telegrammverteiler 25 und einem Quittungssammler 26 aufgebaut ist. Der Verwaltungsbaustein 24 bildet innerhalb des Diagnosesystems eine Verwaltungsebene. Dort werden die im Meßwerterfassungsbaustein 14 mit einer Kennung versehenen Meßwerte MW frei konfigurierbar auf eine Anzahl von Analysemodulen a₁...aₙ verteilt und an diese weitergeleitet. Zur frei einstellbaren Auslösung von Aktionen ist als weitere Funktion der Verwaltungsebene eine Zeitsteuerung 27 vorgesehen.

Die mit einer modulspezifischen Kennung versehenen Meßwerte MW werden als Meßdaten MD vom Telegrammverteiler 25 über einen Kommunikationskanal 28 an die entsprechenden Analysemodule aₗ... aₙ weitergeleitet. Dabei sind die Analysemodule aₗ ... aₙ wiederum über durch Pfeile 29 symbolisierte Datenpuffer an den Kommunikationskanal 28 gekoppelt. Auch kann jedes Analysemodul aₙ über den Quittungssammler 26, der über einen Kommunikationskanal 30 und einen durch den Pfeil 31 symbolisierten Datenpuffer mit den Analysemodulen aₗ...aₙ verbunden ist, und über den Kopplungsbaustein 18 zusätzliche Meßwerte MW anfordern. Die Auslösung derartiger zeitabhängiger Systemaktivitäten erfolgt über die Zeitsteuerung 27, die - wie durch die gestrichelten Pfeile 27a, 27b angedeutet - Triggersignale an die Analysemodule aₗ...aₙ oder an den Verwaltungsbaustein 24 abgibt.

Die Analysemodule aₗ...aₙ sind im wesentlichen algorithmisch implementiert und daher eher mathematisch orientiert. In den einzelnen Analysemodulen aₗ...aₙ werden funktionsspezifische Werte analysiert, Kennwerte errechnet und Soll-Ist-Wert-vergleiche durchgeführt. Jedes Analysemodul aₗ... aₙ führt aufgrund der ihm zur Verfügung gestellten Meßdaten MD verschiedene Analysen und Diagnosen soweit wie möglich selbst durch und ist somit in gewissem Sinne autark. Um die mit dem modularen Aufbau des Diagnosesystems im Analysebereich verbundenen Vorteile nutzen zu können, bestehen somit keine Beziehungen oder Abhängigkeiten zwischen den einzelnen Analysemodulen aₗ...aₙ.

In den funktionsspezifischen und anlagenteilorientierten Analysemodulen aₗ...aₙ werden die Meßdaten MD somit einer modulspezifischen Meßwertbearbeitung unterzogen und als abgeleitete Kenndaten oder Kenngrößen KG weitergegeben.

Die im wesentlichen numerischen Kenngrößen KG unterscheiden sich von den ursprünglichen Meßwerten MW insbesondere dadurch, daß es sich um neue abgeleitete Größen mit gegebenenfalls anderer Dimension handelt. So können z.B. in einem Analysemodul aₙ aus kontinuierlich oder in zeitlichen Abständen erfaßten Meßwerten MW anhand einer vorgegebenen Berechnungsgrundlage thermodynamische Daten berechnet werden. Eine daraus abgeleitete Kenngröße KG kann z.B. ein Wirkungsgrad und somit bereits eine Vorabdiagnose sein. Die Analysemodule aₗ...aₙ bilden innerhalb des Diagnosesystems eine Aktionsebene.

Die abgeleiteten Kenngrößen KG werden in einer Datenbank 32 eines Speicherbausteins 34 abgelegt und dort archiviert. Die Datenbank 32 ist über Schnittstellen 35, 36 mit einem Kommunikationskanalsystem 37 verbunden, über das mittels modulspezifischer Bedienbausteine bₗ...bₙ auf in der Datenbank 32 abgelegte allgemeine Daten oder spezielle Kenngrößen KG zugegriffen werden kann. Einen schnellen Datenzugriff ermöglicht ein Ring- oder Umlaufspeicher 38 des Speicherbausteins 34, der zur kurzzeitigen Zwischenspeicherung der Kenngrößen KG aus den Analysemodulen aₗ...aₙ dient. Der Speicherbaustein 34 bildet innerhalb des Diagnosesystems eine Datenebene und dient zur Entkopplung der durch die Analysemodule aₗ...aₙ gebildeten Aktionsebene und einer durch die Bedienerbausteine bₗ...bₙ gebildeten Präsentationsebene des Diagnosesystems.

Die Entkopplung der Aktionsebene und der Präsentationsebene durch die Datenebene ermöglicht eine freie Konfigurierbarkeit des Diagnosesystems. Dabei können die Aktionsebene und die Präsentationsebene durch zusätzliche Analysemodule aₙ bzw. durch zusätzliche modulspezifische Bedienerbausteine bₙ in einfacher Weise erweitert werden. Die Bausteine 18, 24 und 34 der übrigen Ebenen, d.h. der Kopplungsebene, der Verwaltungsebene bzw. der Datenebene sind lediglich einmal in einem Systemrahmen vorhanden. Für eine Erweiterung müssen somit lediglich zusätzliche Analysemodule aₙ und Bedienerbausteine bₙ in die entsprechende Ebene eingesetzt werden.

Um den modularen Aufbau des Diagnosessystems konsequent durchführen zu können, ist eine modulübergreifende Instanz für solche Diagnosen vorgesehen, die einzelne Analysemodule aₙ deswegen nicht durchführen können, weil dazu Ergebnisse aus anderen Analysemodulen aₗ...aₙ erforderlich sind. Da aber eine modulübergreifende Diagnose wesentlich komplexer ist als eine modulspezifische Diagnose, ist zur Lösung von modulübergreifenden Diagnoseaufgaben ein wissensbasiertes System oder Expertensystem vorgesehen. Dazu sind in der Aktionsebene eine Inferenzkomponente 40 und in der Datenebene eine Wissensbasis 42 angeordnet. Die Inferenzkomponente 40 und die Wissensbasis 42 können jeweils sowohl modulspezifisch als auch modulübergreifend genutzt werden.

Die Inferenzkomponente 40 kommuniziert über die Kanäle 28 und 30 mit den Analysemodulen aₗ...aₙ bzw. dem Verwaltungsbaustein 24 sowie über das Kanalsystem 37 mit dem Speicherbaustein 34. Die Wissensbasis 42 ist über das Kanalsystem 37 mit der Inferenzkomponente 40, der Datenbank 32 und den Bedienerbausteinen bₗ...bₙ verbunden.

Da ein Expertensystem im allgemeinen verbal beschriebene Fakten bearbeitet, müssen die Kenngrößen KG zunächst in verbale Begriffe oder qualifizierte Größen QG umgesetzt werden. Diese Qualifizierung erfolgt zweckmäßigerweise in den Analysemodulen aₗ...aₙ. Die Qualifizierung kann aber auch in nicht näher dargestellter Art und Weise in einer modulübergreifenden, allen Analysemodulen aₗ...aₙ gemeinsamen Qualifizierungskomponente erfolgen. Zur Darstellung und Verarbeitung unsicheren Wissens kann dabei Fuzzy-Logic eingesetzt werden, die kontinuierliche Zwischenwerte zwischen reinen Ja-/Nein-Aussagen erlaubt. Die Wissensdarstellung und Inferenz sind daher auf die Verarbeitung mittels Fuzzy-Logic ausgelegt. Das durch die Wissensbasis 42 und die Inferenzkomponente 40 gebildete Expertensystem erlaubt somit die Verarbeitung unsicheren Wissens und darüber hinaus die Verarbeitung "scharfer", also numerischer Werte oder Größen KG. Letztere werden in die bei der Fuzzy-Logic üblichen linguistischen Variablen, d.h. in qualifizierte Größen QG umgesetzt.

So wird z.B. aus einem in einem Analysemodul aₙ berechneten Wert P(H₂) = Pₛₒₗₗ - 0,3 bar als Faktum: "Der Wasserstoffdruck im Generatorgehäuse liegt um 0,3 bar unter dem Soll-Druck" die verbale Aussage "Der Wasserstoffdruck im Generatorgehäuse ist niedrig". Die Auswertung der Wissensbasis 42 bei dieser konkreten Anwendung erfolgt mittels der Inferenzkomponente 40, die in Form von logischen Schlußfolgerungen die Verarbeitung des Wissens steuert. So wird bei Vorliegen des Faktums "Der Wasserstoffdruck im Generatorgehäuse ist niedrig" durch die Auswertung der in der Wissensbasis 42 abgelegten Regel "Wenn der Wasserstoffdruck im Generatorgehäuse niedrig ist, dann ist das Generatorgehäuse undicht" als Diagnoseergebnis "Das Generatorgehäuse ist undicht" abgeleitet. Dieses Diagnoseergebnis wird in dem Speicherbaustein 34 abgelegt. Das Diagnoseergebnis wird über einen den Funktionen des Generators 4 zugeordneten Bedienerbaustein bₙ durch Zugriff auf die Datenbank 32, z.B. für eine off-line-Diagnose, oder über den temporären Ringspeicher 38, z.B. für eine on-line-Diagnose, abgefragt.

Mit dem aus den aufeinander aufbauenden Ebenen gebildeten Diagnosesystem wird aus einer umfangreichen Meßwerterfassung während des Betriebs der Kraftwerksanlage eine Gesamtaussage über den Zustand des Anlagenprozesses 1 abgeleitet, so daß eine Störung frühzeitig erkannt wird und Maßnahmen für eine Verbesserung des Betriebszustands abgeleitet werden können.

Unter Berücksichtigung der jeweiligen Funktionen und Funktionsgruppen des Turbosatzes einer Dampfturbinenanlage ermöglicht der modulare Aufbau des Diagnosesystems vorteilhafterweise ein hohes Maß an Flexibilität in der Anpassung an anlagenspezifische Aufgaben. Daher ist das Diagnosesystems in einfacher Weise frei konfigurierbar, wobei die Diagnose durch den Einbau weiterer Analysemodulen aₗ..aₙ und entsprechender modulspezifischer Bedienerbausteine bₗ...bₙ weiter vertieft werden kann.

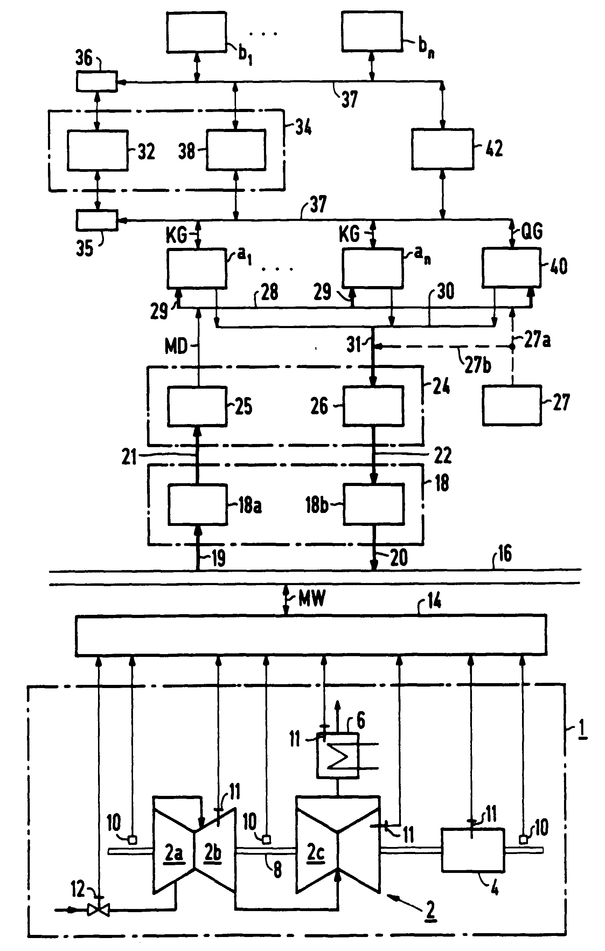

## Patentansprüche

1. Diagnosesystem für eine Anlage, insbesondere für eine Kraftwerksanlage, z.B. für den Turbosatz einer Dampfturbinenanlage, mit einem einer Anzahl von untereinander wechselwirkenden Anlagenteilen (2, 4, 6) zugeordneten Baustein (14) zur on-line-Meßwerterfassung sowie zur Kontrolle und Aufbereitung von Meßwerten, der über Schnittstellen mit einem Datenbus (16) zur Übertragung von anlagenrelevanten Meßwerten (MW) verbunden ist,
**gekennzeichnet durch**
- einen mit dem Datenbus (16) verbundenen Kopplungsbaustein (18) zum Anfordern und zum Weiterleiten von Meßwerten (MW),
- einen Verwaltungsbaustein (24) zur Verteilung der Meßwerte (MW),
- eine Anzahl von Analysemodulen (aₗ...aₙ) zur inhaltsabhängigen Bearbeitung der Meßwerte (MD) und zur Ausgabe von daraus abgeleiteten Kenngrößen,
- einen Speicherbaustein (34) zum Ablegen der Kenngrößen (KG) aus dem oder aus jedem Analysemodul (aₗ...aₙ), und
- eine Anzahl von modulspezifischen Bedienerbausteinen (bₗ...bₙ) zum Abgreifen der Kenngrößen (KG) aus dem Speicherbaustein (34).

2. Diagnosesystem nach Anspruch 1,
**dadurch gekennzeichnet**, daß der Verwaltungsbaustein (24) einen Telegrammverteiler (25) und einen Quittungssammler (26) umfaßt.

3. Diagnosesystem nach Anspruch oder 2,
**dadurch gekennzeichnet**, daß in dem Speicherbaustein (34) eine Datenbank (32) zur Archivierung und ein Ringspeicher (38) zur kurzzeitigen Zwischenspeicherung von aktuellen Kenngrößen (KG) zusammengefaßt sind.

4. Diagnosesystem nach einem der Ansprüche 1 bis 3,
**gekennzeichnet durch** eine modulübergreifende Inferenzkomponente (40) zur Auswertung einer Wissensbasis (42), wobei bei Ausgabe einer qualifizierten Größe (QG) aus dem oder aus jedem Analysemodul (aₗ...aₙ) nach in der Wissensbasis (42) abgelegten Regeln ein Diagnoseergebnis ableitbar ist.

5. Diagnosesystem nach einem der Ansprüche 1 bis 4,
**dadurch gekennzeichnet**, daß die Analysemodule (aₗ...aₙ) und die Bedienerbausteine (bₗ...bₙ) über den Speicherbaustein (34) voneinander entkoppelt sind.

## Claims

1. Diagnosis system for a plant, in particular for a power station, for example for the turbogenerator of a steam turbine plant, having a module (14) assigned to a number of plant parts (2, 4, 6) interacting with each other for on-line measured-value acquisition and for the control and preparation of measured values, which module is connected by way of interfaces to a data bus (16) for the transmission of plant-relevant measured values (MW),
characterized by
- a coupling module (18) connected to the data bus (16) for requesting and relaying measured values (MW),
- an administration module (24) to distribute the measured values (MW),
- a number of analysis modules (aₗ...aₙ) for the content-dependent processing of the measured values (MD) and for the emission of characteristics derived therefrom,
- a memory module (34) to deposit the characteristics (KG) from the or from each analysis module (aₗ...aₙ), and
- a number of module-specific operator modules (bₗ...bₙ) to tap the characteristics (KG) from the memory module (34).

2. Diagnosis system according to claim 1, characterized in that the administration module (24) comprises a message distributor (25) and an acknowledgement accumulator (26).

3. Diagnosis system according to claim 1 or 2, characterized in that in the memory module (34) there are combined a data bank (32) for archiving and a ring memory (38) for the brief intermediate storage of current characteristics (KG).

4. Diagnosis system according to one of claims 1 to 3, characterized by a module-wide inference component (40) to evaluate a knowledge base (42), whereby with the emission of a qualified variable (QG) from the or from each analysis module (aₗ...aₙ) a diagnosis result can be derived according to rules deposited in the knowledge base (42).

5. Diagnosis system according to one of claims 1 to 4, characterized in that the analysis modules (aₗ...aₙ) and the operator modules (bₗ...bₙ) are isolated from each other by way of the memory module (34).

## Revendications

1. Système de diagnostic pour une installation, notamment pour une installation de centrale électrique, par exemple pour le turbogénérateur d'une installation de turbine à vapeur, comportant un composant (14), qui est associé à une pluralité de parties (2,4,6) interagissant de l'installation, qui est destiné à une détection en ligne de valeurs de mesure ainsi qu'au contrôle et à la préparation de valeurs de mesure et qui est relié à un bus (16) de données destiné à la transmission de valeurs (MW) de mesure d'importance pour l'installation par l'intermédiaire d'interfaces,
caractérisé par
- un composant (18) de couplage relié au bus (16) de données et destiné à la demande et à la retransmission de valeurs (MW) de mesure,
- un composant (24) de gestion destiné à la répartition des valeurs (MW) de mesure,
- une pluralité de modules (aₗ à aₙ) d'analyse destinés au traitement, dépendant du contenu, des valeurs (MD) de mesure et à la fourniture de grandeurs caractéristiques obtenues à partir de celles-ci,
- un composant (34) de mémorisation destiné à l'enregistrement des grandeurs (KG) caractéristiques en provenance du ou de chaque module (aₗ à aₙ) d'analyse, et
- une pluralité de composants (bₗ à bₙ) de service spécifiques des modules et destinés au prélèvement des grandeurs (KG) caractéristiques du composant (34) de mémorisation.

2. Système de diagnostic suivant la revendication 1,
caractérisé en ce que le composant (24) de gestion comprend un répartiteur (25) de télégrammes et un collecteur (26) d'accusés de réception.

3. Système de diagnostic suivant la revendication 1 ou 2,
caractérisé en ce qu'il est rassemblé dans le composant (34) de mémorisation une banque (32) de données destinée à l'archivage et une mémoire (38) circulante pour la mémorisation temporaire de grandeurs caractéristiques (KG) actuelles.

4. Système de diagnostic suivant l'une des revendications 1 à 3,
caractérisé par un composant (40) d'inférence empiétant sur un module et destiné à l'exploitation d'une base (42) de connaissances, un résultat de diagnostic pouvant être obtenu, suivant des règles enregistrées dans la base (42) de connaissances, à partir du ou de chaque module (a₁ à aₙ) d'analyse lors de la fourniture d'une grandeur (QG) qualifiée.

5. Système de diagnostic suivant l'une des revendications 1 à 4,
caractérisé en ce que les modules (a₁ à aₙ) d'analyse et les composants (b₁ à bₙ) de service sont découplés l'un de l'autre par l'intermédiaire du composant (34) de mémorisation.
